(19) **Europäisches Patentamt / European Patent Office / Office européen des brevets**

(11) **EP 2 192 292 B1**

(12) **EUROPEAN PATENT SPECIFICATION**

(45) Date of publication and mention
of the grant of the patent:
**26.04.2017 Bulletin 2017/17**

(21) Application number: **08020739.2**

(22) Date of filing: **28.11.2008**

(51) Int Cl.:
*F02D 31/00* (2006.01)   *F02D 29/06* (2006.01)
*F02D 41/14* (2006.01)   *F02D 41/02* (2006.01)
*G05B 13/02* (2006.01)

(54) **Speed control governor**

**Drehzahlregler**

**Régulateur de vitesse de rotation**

(84) Designated Contracting States:
**AT BE BG CH CY CZ DE DK EE ES FI FR GB GR
HR HU IE IS IT LI LT LU LV MC MT NL NO PL PT
RO SE SI SK TR**

(43) Date of publication of application:
**02.06.2010 Bulletin 2010/22**

(73) Proprietor: **Caterpillar Motoren GmbH & Co. KG
24159 Kiel (DE)**

(72) Inventors:
• **Ladlow, Peter T.
Eastfield
Petersborough, PE1 5NA (GB)**

• **Haas, Stefan
24107 Quarnbek/OT Flemhude (DE)**
• **Ritscher, Bert
24159 Kiel (DE)**

(74) Representative: **BRP Renaud & Partner mbB
Rechtsanwälte Patentanwälte
Steuerberater
Königstraße 28
70173 Stuttgart (DE)**

(56) References cited:
**EP-A- 1 439 292        DE-B3- 10 253 739
FR-A- 2 891 585        US-A- 3 458 821
US-A1- 2007 057 512**

## Description

Technical Field

The present disclosure relates to a governor adapted to control the speed of an output shaft of a drive unit. The present disclosure further relates to a system adapted to supply a load with electrical power. Furthermore, the present disclosure relates to a method to control an actual speed of an output shaft of a drive unit as to be equal to a set speed.

Background

In practice there are many applications for which a combustion engine that drives a power consuming means has to be controlled such that its speed is maintained at a constant rate, even when the power necessary to drive the power-consuming means changes. A typical example of such an application is a gen set (generator set) with a combustion engine that drives an electrical power generator supplying external consuming units (e.g., a hospital) with electrical energy.

It is known to control the speed of a combustion engine by a governor comprising a PID controller that generates a control signal adapted to control the speed of the engine. The control signal depends on the difference between an actual speed and a set speed supplied to the input of the PID controller. US 6,021,755 discloses a method for determining a fuel command for a fuel system. The fuel command is calculated by a PID governor and depends on an error signal derived from a desired or a set engine speed and an actual engine speed. The error signal is supplied not only to the PID governor, but also directly to a control block connected to the fuel system and supplied with the output signal of the PID controller and the error signal.

FR 2891585 A1 discloses a system for controlling a control motor, which e.g. controls the position of a valve member of a valve, wherein this position can be changed by a linear or a rotational movement. The system includes three PID-controllers with an error signal corresponding to a difference between a set position and an actual position of the valve member as an input of the first PID-controller and a voltage, which is supplied to the control motor, constituting an output of the third PID-controller.

US 2007/0057512 A1 discloses a governor adapted to control overall speed of an output shaft of a drive unit by controlling the amount of fuel supplied to the drive unit with use of a PID-controller. Base gains of the proportional branch, integral branch and derivative branch of the PID-controllers are multiplied by respective factors, which depend on a difference of the target speed and the observed speed of the drive unit and the fuel instantly supplied to the drive unit.

In known governors there is a trade-off between minimizing variation in speed when a load is constant versus making the controller respond quickly when the load changes.

The present disclosure is directed, at least in part, to improving or overcoming one or more aspects of prior systems.

## Summary of the invention

According to one aspect of the present disclosure a governor adapted to control the speed of an output shaft of a combustion engine may comprise a PID controller with an input supplied with an error signal corresponding to the difference between a set speed and an actual speed of the output shaft, and an output supplying a control signal adapted to control the speed of the drive shaft, wherein at least one of a proportional gain factor, an integral gain factor and a derivative gain factor is corrected by a correction parameter depending on a delta error, the delta error corresponding to a time derivative of said difference.

According to a further aspect of the disclosure, the proportional gain factor $P = Kp \times e(t)$, integral gain factor $I = Ki \times \int_{o}^{t} e(\tau)\,d\tau$ and derivative gain factor $D = Kd \times \Delta e(t)$ may be calculated with Kp, Ki, Kd being parameters, t being time and $\Delta e(t)$ being a time derivative of said error signal.

According to a further aspect the correction parameter may depend in addition on the difference between the set speed and the actual speed of the output shaft.

According to a further aspect, a correction parameter calculation means may be provided to calculate the correction parameters so as to enable different gain profiles of the controller for increasing and decreasing delta errors.

According to a further aspect, the proportional gain factor and the integral gain factor may be corrected by respective correction parameters.

According to a further aspect, at least one of the proportional gain parameter and the derivative gain parameter is mapped depending on the actual engine speed.

According to a further aspect, the control signal may control the amount of fuel fed to the engine.

According to a further aspect, the proportional gain parameter, the integral gain parameter and the derivative gain parameter may depend on a temperature of a fuel fuelling the engine.

According to a further aspect of the present disclosure, a method to control an actual speed of an output shaft of a combustion engine as to be equal to a set speed may comprise the steps of generating an actual speed signal corresponding to the actual speed of the output shaft, generating an error signal corresponding to the difference between the set speed and the actual speed,

generating a delta error signal corresponding to a time derivative of the error signal, supplying the error signal to a PID controller, which generates a proportional gain factor, an integral gain factor and a derivative gain factor, generating at least one of a P-correction parameter, I-correction parameter and D-correction parameter depending on the delta error signal, modifying at least one of the proportional gain factor, integral gain factor and derivative gain factor by the respective P-correction parameter, I-correction parameter and D-correction parameter, combining the modified and if applicable unmodified gain factors to generate a control signal; and supplying the control signal to a speed control unit to change the speed of the output shaft as to minimize a difference between the actual speed and the set speed.

According to a further aspect, generating at least one of the P-correction parameter, I-correction parameter and D-correction parameter may depend on a temperature of a fuel supplied to the engine.

A governor as disclosed therein may provide a tight engine speed control under steady-state conditions wherein the speed has to be maintained at a constant value despite a change in the amount of power consumed by the power-consuming means, in addition to a smooth transition between changes in desired or set speeds.

It is to be understood that both the foregoing general description and the following detailed description are exemplary and explanatory only and are not restrictive of the disclosure.

Other features and aspects of this disclosure will be apparent to the skilled person based upon the following description, the accompanying drawings and the attached claims.

Brief Description of the Drawings

Fig. 1 shows a block diagram of a gen set,
Fig. 2 discloses a functional diagram of a closed loop control of the gen set of Fig. 1, and
Fig. 3 discloses a block diagram of a governor according to an exemplary embodiment of the present disclosure.

Detailed Description

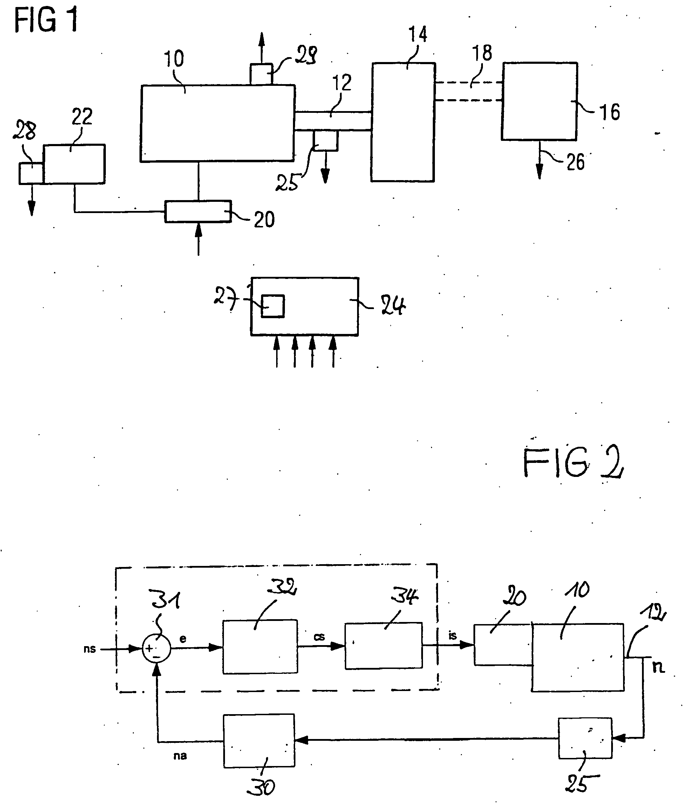

Referring to Fig. 1, an exemplary embodiment of the present disclosure may comprise a combustion engine 10 which drives via an output shaft 12 a generator 14 for generating electrical energy. The generator 14 supplies a power consuming means 16 with electric energy via lines 18.

The engine 10 of this exemplary embodiment may be any kind of a combustion engine including a fuel metering unit 20 supplied with fuel from a fuel tank 22.

In the present embodiment the amount of fuel supplied from the fuel metering unit 20 to the engine 10 may determine the power generated by the engine and therefore determines the speed of the output shaft 12 in case the load taken up by the power consuming means 16 or the power necessary to drive the generator 14 is constant.

Furthermore, there is provided an electric control unit 24 provided with input signals from a speed sensor 25 sensing the speed of the shaft 12; a power demand signal 26 generated within the power consuming means 16; a set speed signal 27, which can be input to the electronic control unit 24 or generated within the control unit 24, a temperature signal generated by a temperature sensor 28 sensing the temperature of the fuel within the tank 22; and further input signals, (e.g. a temperature signal generated by temperature sensor 29 sensing the temperature of the engine 10).

Fig. 2 shows a functional block diagram of the control of the power supply system of Fig. 1, wherein for corresponding parts the same reference numerals are used as in Fig. 1.

Output signal of speed sensor 25 may be directly taken as a signal corresponding to the actual speed of output shaft 12 or may be supplied to a signal processing unit 30, where it may be processed as to generate a signal corresponding to the actual speed na of the output shaft 12, and, e.g., being free from any noise disturbances. The signal na corresponding to the actual speed of the output shaft 12 and a signal, corresponding to the desired or set speed ns are supplied to an input of an error signal generator 31 which generates an error signal e, corresponding to the difference between the set speed and the actual speed. The error signal e is supplied to an input of a governor 32, the structure of which will be explained later. The governor 32 generates a control signal CS which may be supplied to a linearization unit 34, wherein the control signal CS is linearised. The outlet of the linearization unit 34 provides an input signal IS, which is supplied to the fuel metering unit 20 to determine a fuel delivered to the engine 10. The control signal CS may alternatively directly be used as an input signal IS.

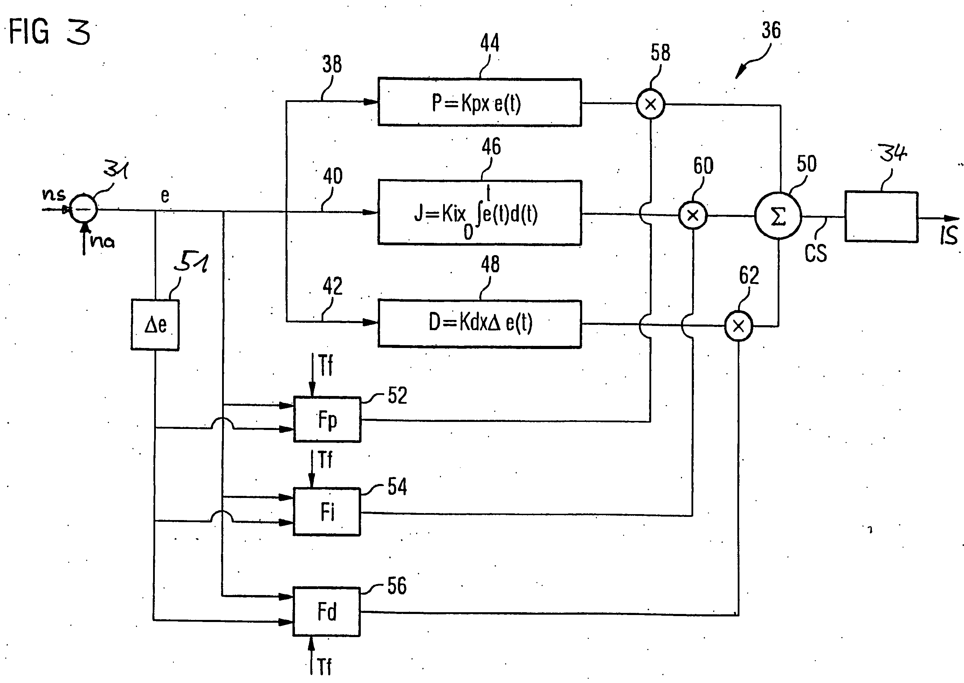

Fig. 3 shows a detailed block diagram of the units included within the control system within the box shown in Fig. 2 with a dashed line.

According to Fig. 3, the error signal e, which corresponds to the difference between a desired or set speed ns of the shaft 12, and an actual speed na of the shaft 12 is supplied to a PID controller 36 with a P-branch 38, an I-branch 40 and an D-branch 42.

The design of the prior art PID (proportional-integral-derivative) controller is known per se and is therefore not described in detail herein.

Parameters Kp, Ki and Kd may be stored in maps depending on operation parameters of the system, e.g. the speed of the shaft 12, the fuel temperature, the power taken by the consumer unit 16, etc.

According to the present disclosure there is provided a $\Delta$ unit 51, which generates at its output a signal $\Delta e$, corresponding to the timely change or the time derivative of the error signal e.

Furthermore, there are provided correction units 52, 54 and 56 with input terminals supplied with the error signal e and the Δe signal.

The correction unit 52 generates a correction parameter Fp, which is supplied to a combining unit 58 provided between the P-control unit 44 and the output unit 50 to combine the correction parameter Fp with the proportional gain factor at the output of the P-control unit 44.

Similarly, correction units 54 and 56 generate correction parameters Fi and Fd supplied to combining units 60 and 62 provided between the I-control unit 46 and the D-control unit 48 and the output unit 50. In an exemplary embodiment, the correction parameters Fp, Fi, Fd may be correction factors that are multiplied by the proportional gain factor, the integral gain factor and the derivative gain factor in the units 58, 60, 62, so that the corrected proportional gain factor, integral gain factor and the derivative gain factor are added in the output unit 50 to provide the control signal CS delivered to the linearization unit 34.

The P-branch 38 includes a P-control unit 44 to provide a proportional gain-factor, $P = Kp \cdot e(t)$, wherein Kp is a proportional gain parameter and t is the time.

The I-branch 40 includes an I-control unit to provide an integral gain factor $I = K_I \int_O^I e(\tau) d\tau$ wherein Ki is an integral gain parameter.

The D-branch includes a D-control unit to generate a derivative gain factor $D = Kd \cdot \Delta e(t)$, wherein Kd is a derivative gain parameter and Δ is a differentiator, i.e. d/dt, so that Δe(t) means time derivative of the error signal (e).

The outputs of the control units 44, 46, 48 are summed in an output unit 50, which generates as the control signal CS.

Industrial Applicability

In the following the function of an exemplary embodiment of the system according to Figs. 1-3 is described:

The drive unit 10 may be a combustion engine, e.g. a diesel engine, wherein the fuel amount supplied to the engine directly determines the power generated by the engine or the speed of its output shaft 12. The generator 14 may be a generator, which supplies an electrical system with alternating current with a predetermined frequency.

The set speed signal 27 is set corresponding to the frequency of the alternating current to be supplied. Speed sensor 25 senses the speed of the output shaft 12 and supplies a signal corresponding to the actual speed signal to the error signal generator 31. The output signal of speed sensor 25 may be processed by the signal processing unit 30 to take off e.g. any noise or any other disturbances. The set speed signal ns, which corresponds to the desired speed of the output shaft 12 is supplied also to the error signal generator 31, which generates the error signal e, which corresponds to the difference between the set speed and the actual speed. This error signal is processed within the PID controller as to generate a proportional gain factor P, an integral gain factor I and a derivative gain factor D at the outputs of the P-branch, E-branch and D-branch 38, 40, 42.

The gain parameters Kp, Ki, Kd may be mapped depending on operation parameters of the system, e.g. temperature of the engine, required power, speed, etc. In an alternative embodiment the parameters may be calculated by predetermined formulas. It is also possible that the parameters are constant.

In the delta unit 51 the time derivative of the error signal is calculated. The signal Δe is supplied to the correction units 52, 54, 56. Preferably also the error signal e is supplied to these units. The units 52, 54, 56 calculate correction parameters Fp, Fi, Fd, which depend on Δe and, if given, on signal e and may further depend on the fuel temperature Tf, sensed by the temperature sensor 28. The correction parameters Fp, Fi, Fd may be factors, which are multiplied in the combination units 58, 16, 62 with the gain factors generated from units 44, 46 and 48. The corrected gain factors are supplied to the output unit 50, wherein they are added to generate the control signal CS. This control signal may be linearized in the linearization unit 34 to generate the input signal IS which is inputted to the fuel metering unit 20, which controls the fuel delivered to the engine 10 as to minimize deviation between the actual speed Na of the output shaft 12 and the set speed ns.

With the correction units 52, 54 and 56 it is possible to minimize an inherent trade-off in tuning of the Kp, Ki, Kd gain parameters of the PID controller between an optimization for steady state stabilization requirements and an optimization for transient response requirements. If the PID gains are too small the controller will not respond fast enough to prevent the speed deviating outside the allowable range or to recover speed within an allowed time. If the gains are too large the engine speed will not stabilize quickly enough under steady state conditions.

During steady state conditions, i.e. e.g. a constant set speed and a constant load, both the speed error e and the delta error Δe will be relatively small, but following a rapid increase or decrease in engine load or power demand of the generator the speed error e and delta error Δe will be relatively large. The Fp, Fi, Fd correction parameters, which are preferably used as factors, which are multiplied with the output signals of the units 44, 46, 48, enable to set the effective gains differently under steady state and transient conditions. The gain parameters Kp, Ki, Kd can therefore be optimized for more stable steady state performance and the Fp, Fi, Fd correction parameters can be tuned for more responsive transient performance.

The determination of Fp, Fi, and Fd based on a combination of error signal e and Δe rather than just signal e enables a further refinement, e.g. if the error is large and increasing fast, then the controller may need to respond more quickly than when the error is large, but increasing slowly, or indeed when it is large and decreasing. Furthermore, if the error is decreasing in magnitude it may be necessary to adjust the control gain to prevent overshoot of the set speed.

An example, where the set speed is changed, is a "Droop"-mode, where the set speed changes depending on the load, e.g. the power requirement of an electrical system.

The system as described before may be modified in many respects:

The drive unit may be any kind of combustion engine or may be a hydraulic or pneumatic engine. In case of a combustion engine the temperature of the combustion engine as measured by temperature sensor 29 may be used to limit the power generated by the engine in its cold condition.

In modified embodiments there must not be provided correction units 52, 54, 56 for each branch 40, 42 and 44 of the PID controller, e.g. there may be provided only control units 52 and 54 for the P-branch and the I-branch. The temperature of the fuel must not be taken into account in each correction unit. The different control units may be supplied with different input signals, e.g. the error signal e, the Δ error signal Δe and the temperature signal of the fuel alone or in any combination.

Furthermore, there may be provided a limiting unit between the output unit 50 and e.g. the injection unit 20 that limits the fuel injected into the engine between a lower limit and an upper limit to protect an inadvertent stopping of the engine or an overload of the engine. Furthermore, there may be provided a unit generating a said speed signal depending on the power requirement of the consumer unit 16.

Although the preferred embodiments of this invention have been described herein, improvements and modifications may be incorporated without departing from the scope of the following claims.

**Claims**

1. A governor adapted to control the speed of an output shaft (12) of a combustion engine (10), the governor comprising:

    a PID controller (36) with an input supplied with an error signal (e) corresponding to the difference between a set speed and an actual speed of the output shaft, and an output supplying a control signal (OS) adapted to control the speed of the drive shaft, wherein at least one of a proportional gain factor (P), an integral gain factor (I) and a derivative gain factor (D) is corrected by a correction parameter (Fp, Fi, Fd) depending on a delta error, the delta error corresponding to a time derivative of said difference.

2. The governor according to claim 1, wherein the proportional gain factor P = Kp x e(t) is provided by a P-control unit (44), the integral gain factor

$$I = Ki \; x \int_{o}^{t} e(\tau) d\tau \;\; \text{is provided by an I-control unit}$$

(46) and the derivative gain factor D = Kd x Δe(t) is provided by a D-control unit (48) with Kp, Ki, Kd being gain parameters, t being time and Δe(t) being a time derivative of said error signal.

3. The governor according to claim 1, wherein the correction parameter (Fp, Fi, Fd) depends in addition on said difference.

4. The governor according to claim 1 or 2, wherein correction parameter calculation means (52, 54, 56) are provided to calculate the correction parameters (Fp, Fi, Fd) so as to enable different gain profiles of the controller for increasing and decreasing delta errors.

5. The governor according to any of claims 1 to 3, wherein the proportional gain factor (P) and the integral gain factor (I) are corrected by respective correction parameters (Fp, Fi).

6. The governor according to claim 2, wherein at least one of the proportional gain parameter (Kp), the integral gain parameter (Ki) and the derivative gain parameter (Kd) is mapped depending on the actual engine speed.

7. The governor according to any of claims 1 to 5, wherein the control signal controls the amount of fuel fed to the engine (10).

8. The governor according to claim 6, wherein at least one of the proportional gain parameter (Kp), the integral gain parameter (Ki) and the derivative gain parameter (Kd) depends on a temperature of a fuel fuelling the engine.

9. A method to control an actual speed of an output shaft of a combustion engine as to be equal to a set speed, the method comprising the steps of:

    generating an actual speed signal corresponding to the actual speed of the output shaft;

generating an error signal (e) corresponding to the difference between the set speed and the actual speed,

generating a delta error signal (Δe) corresponding to a time derivative of the error signal,

supplying the error signal to a PID controller (36), which generates a proportional gain factor, an integral gain factor and a derivative gain factor,

generating at least one of a P-correction parameter (Fp), I-correction parameter (Fi) and D-correction parameter (Fd) depending on the delta error signal,

modifying at least one of the proportional gain factor, integral gain factor and derivative gain factor by the respective P-correction parameter, I-correction parameter and D-correction parameter,

combining the modified and if applicable unmodified gain factors to generate a control signal; and

supplying the control signal to a speed control unit to change the speed of the output shaft as to minimize a difference between the actual speed and the set speed.

10. The method according to claim 9, wherein the proportional gain factor P = Kp x e(t), integral gain factor

$$I = Ki \: x \int_{o}^{t} e(\tau) d\tau$$ and derivative gain factor D = Kd x Δe(t) are calculated with Kp, Ki, Kd being gain parameters, t being time and Δe(t) being a time derivative of said error signal.

11. The method according to claim 9 or 10, wherein generating at least one of the P-correction parameter (Fp), I-correction parameter (Fi) and D-correction parameter (Fd) depends in addition on the error signal.

12. The method according to any of claims 1 to 11 , wherein generating at least one of the P-correction parameter (Fp), I-correction parameter (Fi) and D-correction parameter (Fd) depends on a temperature of a fuel supplied to the engine.

**Patentansprüche**

1. Regulator, der eingerichtet ist, um die Geschwindigkeit einer Ausgangswelle (12) eines Verbrennungsmotors (10) zu regeln, wobei der Regulator aufweist:

einen PID-Regler (36) mit einem Eingang, der mit einem Fehlersignal (e) versorgt wird, das der Differenz zwischen einer eingestellten Geschwindigkeit und einer tatsächlichen Geschwindigkeit der Ausgangswelle entspricht, und einem Ausgang, der ein Regelungssignal (OS) zur Verfügung stellt, das eingerichtet ist, um die Geschwindigkeit der Antriebswelle zu regeln,

wobei mindestens einer von einem proportionalen Verstärkungsfaktor (P), einem integralen Verstärkungsfaktor (I) und einem differenzialen Verstärkungsfaktor (D) durch einen Korrekturparameter (Fp, Fi, Fd) korrigiert wird, der von einem Deltafehler abhängt, wobei der Deltafehler einer zeitlichen Ableitung der genannten Differenz entspricht.

2. Regulator nach Anspruch 1, wobei der proportionale Verstärkungsfaktor P = Kp x e(t) von einer P-Regelungseinheit (44) bereitgestellt wird, der integrale

Verstärkungsfaktor $I = Ki \: x \int_{0}^{t} e(\tau) d\tau$ von

einer I-Regelungseinheit (46) bereitgestellt wird, und der differenziale Verstärkungsfaktor D = Kd x Δe(t) von einer D-Regelungseinheit (48) bereitgestellt wird, wobei Kp, Ki, Kd Verstärkungsparameter sind, t Zeit ist und Δe(t) eine zeitliche Ableitung des genannten Fehlersignals ist.

3. Regulator nach Anspruch 1, wobei der Korrekturparameter (Fp, Fi, Fd) zusätzlich von der genannten Differenz abhängt.

4. Regulator nach Anspruch 1 oder 2, wobei Mittel (52, 54, 56) zur Berechnung der Korrekturparameter bereitgestellt sind, um die Korrekturparameter (Fp, Fi, Fd) derart zu berechnen, dass verschiedene Verstärkungsprofile des Reglers zum Erhöhen und Senken von Deltafehlern ermöglicht werden.

5. Regulator nach einem der Ansprüche 1 bis 3, wobei der proportionale Verstärkungsfaktor (P) und der integrale Verstärkungsfaktor (I) durch jeweilige Korrekturparameter (Fp, Fi) korrigiert werden.

6. Regulator nach Anspruch 2, wobei mindestens einer von dem proportionalen Verstärkungsparameter (Kp), dem integralen Verstärkungsparameter (Ki) und dem differenzialen Verstärkungsparameter (Kd) in Abhängigkeit von der tatsächlichen Motorgeschwindigkeit gemappt wird.

7. Regulator nach einem der Ansprüche 1 bis 5, wobei das Regelungssignal die Menge von Treibstoff regelt, die dem Motor (10) zugeführt wird.

8. Regulator nach Anspruch 6, wobei mindestens einer von dem proportionalen Verstärkungsparameter (Kp), dem integralen Verstärkungsparameter (Ki) und dem differenzialen Verstärkungsparameter (Kd) von einer Temperatur eines den Motor antreibenden Treibstoffs abhängt.

9. Verfahren zum Regeln einer tatsächlichen Geschwindigkeit einer Ausgangswelle eines Verbrennungsmotors, so dass diese gleich einer eingestellten Geschwindigkeit ist, wobei das Verfahren die folgenden Schritte aufweist:

Generieren eines Signals der tatsächlichen Geschwindigkeit, das der tatsächlichen Geschwindigkeit der Ausgangswelle entspricht;
Generieren eines Fehlersignals (e), das der Differenz zwischen der eingestellten Geschwindigkeit und der tatsächlichen Geschwindigkeit entspricht,
Generieren eines Deltafehlersignals (∆e) das einer zeitlichen Ableitung des Fehlersignals entspricht,
Zur Verfügung stellen des Fehlersignals an einen PID Regler (36), der einen proportionalen Verstärkungsfaktor, einen integralen Verstärkungsfaktor und einen differenzialen Verstärkungsfaktor generiert,
Generieren mindestens eines von einem P-Korrekturparameter (Fp), einem I-Korrekturparameter (Fi) und einem D-Korrekturparameter (Fd) in Abhängigkeit von dem Deltafehlersignal,
Modifizieren mindestens eines von dem proportionalen Verstärkungsfaktor, dem integralen Verstärkungsfaktor, und dem differenzialen Verstärkungsfaktor durch den entsprechenden P-Korrekturparameter, I-Korrekturparameter und D-Korrekturparameter,
Kombinieren der modifizierten und, wenn anwendbar, der unmodifizierten Verstärkungsparameter, um ein Regelungssignal zu generieren; und
Zur Verfügung stellen des Regelungssignals an eine Geschwindigkeitsregelungseinheit, um die Geschwindigkeit der Ausgangswelle derart zu ändern, dass eine Differenz zwischen der tatsächlichen Geschwindigkeit und der eingestellten Geschwindigkeit zu minimiert wird.

10. Verfahren nach Anspruch 9, wobei der proportionale Verstärkungsfaktor P = Kp x e(t), integrale Verstärkungsfaktor $I = Ki \times \int_0^t e(\tau)d\tau$, und differenziale Verstärkungsfaktor D = Kd x ∆e(t) berechnet werden, wobei Kp, Ki, Kd Verstärkungsparameter sind, t Zeit ist und ∆e(t) eine zeitliche Ableitung des genannten Fehlersignals ist.

11. Verfahren nach Anspruch 9 oder 10, wobei das Generieren mindestens eines von dem P-Korrekturparameter (Fp), I-Korrekturparameter (Fi) und D-Korrekturparameter (Fd) zusätzlich von dem genannten Fehlersignal abhängt.

12. Verfahren nach einem der Ansprüche 1 bis 11, wobei das Generieren mindestens eines von dem P-Korrekturparameter (Fp), I-Korrekturparameter (Fi) und D-Korrekturparameter (Fd) von einer Temperatur eines dem zur Verfügung gestellten Treibstoffs abhängt.

**Revendications**

1. Régulateur adapté pour commander la vitesse d'un arbre de sortie (12) d'un moteur à combustion (10), le régulateur comprenant :

un dispositif de commande proportionnellement-intégral-différentiel (PID) (36) avec une entrée recevant un signal d'erreur (e) correspondant à la différence entre une vitesse définie et une vitesse réelle de l'arbre de sortie, et une sortie fournissant un signal de commande (OS) adapté pour commander la vitesse de l'arbre d'entraînement,
dans lequel au moins l'un parmi un facteur de gain proportionnel (P), un facteur de gain intégral (I) et un facteur de gain dérivé (D) est corrigé par un paramètre de correction (Fp, Fi, Fd) dépendant d'une erreur delta, l'erreur delta correspondant à une dérivée temporelle de ladite différence.

2. Régulateur selon la revendication 1, dans lequel le facteur de gain proportionnel P = Kp x e(t) est fourni par une unité de commande P (44), le facteur de gain intégral $I = Ki \times \int_0^t e(\tau)d\tau$ est fourni par une unité de commande I (46) et le facteur de gain dérivé D = Kd x ∆e(t) est fourni par une unité de commande D (48) avec Kp, Ki, Kd représentant des paramètres de gain, t représentant le temps et ∆e(t) représentant une dérivée temporelle dudit signal d'erreur.

3. Régulateur selon la revendication 1, dans lequel le paramètre de correction (Fp, Fi, Fd) dépend en plus de ladite différence.

4. Régulateur selon la revendication 1 ou 2, dans lequel des moyens de calcul de paramètre de correction (52, 54, 56) sont fournis pour calculer les paramètres de correction (Fp, Fi, Fd) afin de permettre différents profils de gain du dispositif de commande pour augmenter et diminuer des erreurs delta.

5. Régulateur selon l'une quelconque des revendications 1 à 3, dans lequel le facteur de gain proportionnel (P) et le facteur de gain intégral (I) sont corrigés par des paramètres de correction respectifs (Fp, Fi).

6. Régulateur selon la revendication 2, dans lequel au moins l'un parmi le paramètre de gain proportionnel (Kp), le paramètre de gain intégral (Ki) et le paramètre de gain dérivé (Kd) est mappé en fonction de la vitesse de moteur réelle.

7. Régulateur selon l'une quelconque des revendications 1 à 5, dans lequel le signal de commande commande la quantité de carburant amenée au moteur (10).

8. Régulateur selon la revendication 6, dans lequel au moins l'un parmi le paramètre de gain proportionnel (Kp), le paramètre de gain intégral (Ki) et le paramètre de gain dérivé (Kd) dépend d'une température d'un carburant alimentant le moteur.

9. Procédé de commande d'une vitesse réelle d'un arbre de sortie d'un moteur à combustion de façon à ce qu'elle soit égale à une vitesse définie, le procédé comprenant les étapes suivantes :

la génération d'un signal de vitesse réelle correspondant à la vitesse réelle de l'arbre de sortie ;
la génération d'un signal d'erreur (e) correspondant à la différence entre la vitesse définie et la vitesse réelle,
la génération d'un signal d'erreur delta (△e) correspondant à une dérivée temporelle du signal d'erreur,
la fourniture du signal d'erreur à un dispositif de commande PID (36), qui génère un facteur de gain proportionnel, un facteur de gain intégral et un facteur de gain dérivé,
la génération d'au moins l'un parmi un paramètre de correction P (Fp), un paramètre de correction I (Fi) et un paramètre de correction D (Fd) dépendant du signal d'erreur delta,
la modification d'au moins l'un parmi le facteur de gain proportionnel, le facteur de gain intégral et le facteur de gain dérivé par le paramètre de correction P, le paramètre de correction I et le paramètre de correction D respectifs,
la combinaison des facteurs de gain modifiés et le cas échéant non modifiés pour générer un signal de commande ; et
la fourniture du signal de commande à une unité de commande de vitesse pour changer la vitesse de l'arbre de sortie de façon à réduire au minimum une différence entre la vitesse réelle et la vitesse définie.

10. Procédé selon la revendication 9, dans lequel le facteur de gain proportionnel P = Kp x e(t), le facteur de gain intégral $I = Ki \times \int_{0}^{t} e(\tau)d\tau$ et le facteur de gain dérivé D = Kd x △e(t) sont calculés avec Kp, Ki, Kd représentant des paramètres de gain, t représentant le temps et △e(t) représentant une dérivée temporelle dudit signal d'erreur.

11. Procédé selon la revendication 9 ou 10, dans lequel la génération d'au moins l'un parmi le paramètre de correction P (Fp), le paramètre de correction I (Fi) et le paramètre de correction D (Fd) dépend en plus du signal d'erreur.

12. Procédé selon l'une quelconque des revendications 1 à 11, dans lequel la génération d'au moins l'un parmi le paramètre de correction P (Fp), le paramètre de correction I (Fi) et le paramètre de correction D (Fd) dépend d'une température d'un carburant fourni au moteur.

FIG 1

FIG 2

FIG 3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6021755 A
- FR 2891585 A1

- US 20070057512 A1